# FASCICULE DE BREVET EUROPEEN

(11) **EP 4 244 474 B1**
(45) Date de publication et mention de la délivrance du brevet: **01.01.2025**
(21) Numéro de dépôt: 21820298.4
(22) Date de dépôt: 12.11.2021
(51) Int. Cl.: F02C 3/10, F02C 7/32, F01D 15/10, F02C 7/275

(54) **TURBOMACHINE À TURBINE LIBRE COMPRENANT DES MACHINES ÉLECTRIQUES ASSISTANT UN GÉNÉRATEUR DE GAZ ET UNE TURBINE LIBRE**
TURBOMASCHINE MIT FREIER TURBINE MIT ELEKTRISCHEN MASCHINEN ZUR UNTERSTÜTZUNG EINES GASGENERATORS UND EINER FREIEN TURBINE
TURBOMACHINE HAVING A FREE TURBINE COMPRISING ELECTRIC MACHINES ASSISTING A GAS GENERATOR AND A FREE TURBINE

(30) Priorité: 13.11.2020 FR 2011634
(43) Date de publication de la demande: 20.09.2023
(73) Titulaire: Safran Helicopter Engines, 64510 Bordes (FR)
(72) Inventeur: VIVE, Loïs, Pierre, Denis, 77550 MOISSY-CRAMAYEL (FR); BEDRINE, Olivier, 77550 MOISSY-CRAMAYEL (FR); DROUIN, Thomas, 77550 MOISSY-CRAMAYEL (FR)
(74) Mandataire: Cabinet Beau de Loménie
(86) Numéro de dépôt international: PCT/FR2021/052000
(87) Numéro de publication internationale: WO 2022/101586

(56) Documents cités:
- FR-A1- 2 929 324
- FR-A1- 3 019 220
- FR-A1- 3 081 150
- FR-A1- 3 084 340
- US-A1- 2016 097 328

## Description

### Domaine Technique

La présente invention se rapporte au domaine général des turbomachines aéronautiques et plus particulièrement à l'entrainement des équipements via la turbine libre sans compromettre leur fonctionnement au démarrage de la turbomachine.

### Technique antérieure

Un turbomoteur à turbine libre pour hélicoptère comporte généralement un générateur de gaz et une turbine libre entraînée en rotation par le flux de gaz généré par le générateur de gaz, ainsi qu'une machine électrique réversible qui peut être couplée au générateur de gaz notamment pour mettre en rotation le générateur de gaz lors d'une phase de démarrage du turbomoteur.

Traditionnellement, le générateur de gaz comporte au moins un compresseur et une turbine couplés en rotation. Le principe de fonctionnement est le suivant : l'air frais entrant dans le turbomoteur est comprimé du fait de la rotation du compresseur avant d'être envoyé vers une chambre de combustion où il est mélangé à un carburant. Les gaz brûlés lors de la combustion sont ensuite évacués à grande vitesse.

Il se produit alors une première détente dans la turbine du générateur de gaz, durant laquelle cette dernière extrait l'énergie nécessaire à l'entraînement du compresseur et des équipements. La turbine du générateur de gaz n'absorbe pas toute l'énergie cinétique des gaz brûlés et l'excédent d'énergie cinétique correspond au flux de gaz généré par le générateur de gaz. Ce dernier fournit donc de l'énergie cinétique à la turbine libre de sorte qu'il se produit dans la turbine libre une seconde détente qui transforme cette énergie cinétique en énergie mécanique afin d'entraîner un organe récepteur, telle rotor de l'hélicoptère.

Lors de la phase de démarrage du turbomoteur, il est nécessaire d'entraîner en rotation le générateur de gaz, c'est-à-dire entraîner en rotation le compresseur couplé à la turbine ainsi que les différents équipements qui sont connectés. Comme mentionné en préambule, c'est précisément l'un des rôles de la machine électrique réversible qui est le plus souvent un moteur électrique apte à fonctionner de manière réversible en génératrice électrique.

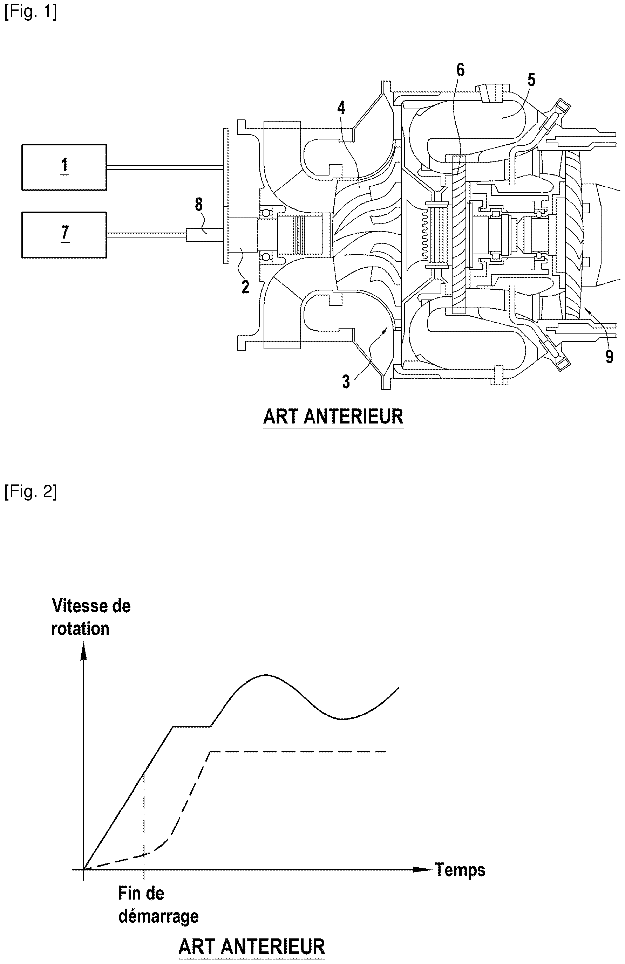

Comme cela est illustré sur la figure 1 qui présente schématiquement une turbomachine à turbine libre selon l'état de la technique, pour le démarrage, une machine électrique 1 dans un fonctionnement moteur entraîne les accessoires, non représentés, et l'arbre mécanique 2 du générateur de gaz 3, jusqu'à ce que la rotation de celui-ci soit entretenue par la combustion de carburant. L'arbre 8 de la turbine libre 9 étant mécaniquement découplé de l'arbre 2 du générateur de gaz, la machine électrique 1 n'entraîne pas l'arbre 8. La turbine libre 9 est alors entraînée uniquement par le flux gazeux sortant du générateur de gaz. L'entraînement en rotation du compresseur par la machine électrique 1 fonctionnant en moteur permet en effet d'entraîner les équipements pour alimenter la turbomachine en carburant et en huile et de faire circuler de l'air dans le compresseur 4 et donc d'amener de l'air comprimé dans la chambre de combustion 5 afin d'initier la combustion. Cette combustion produit alors le flux gazeux permettant d'entraîner la turbine 6 de la turbine à gaz 3 en rotation, à la suite de quoi le compresseur 4 et les équipements sont directement entraînés en rotation par la turbine 6, ce qui signifie que le générateur de gaz 3 fonctionne de manière autonome, traduisant la fin de la phase de démarrage du turbomoteur.

En outre, pour un turbogénérateur à turbine libre comme celui illustré sur la figure 1, une seconde machine électrique 7 peut être prévue en prise sur l'arbre 8 de la turbine libre 9 pour permettre de répondre au besoin de génération forte puissance.

Il est connu que les aéronefs, dans lesquels de tels turbomoteurs sont notamment destinés à être intégrés, comportent de nombreux composants électriques qu'il est nécessaire d'alimenter par de l'énergie électrique. Par exemple, pour un aéronef à décollage et atterrissage vertical ayant une propulsion électrique, il est nécessaire d'alimenter en énergie électrique l'ensemble des rotors électriques.

Sur une turbomachine comme illustré sur la figure 1, les équipements tels que la pompe à carburant, et la pompe à huile sont mécaniquement reliés à l'arbre 2 du générateur de gaz 3 via une boite d'accessoires.

Une fois la phase de démarrage terminée, il est connu d'utiliser la machine électrique 1 si celle-ci est réversible dans un mode de fonctionnement générateur pour produire de l'énergie électrique non propulsive (réseau 28V par exemple) pour fournir de l'électricité aux appareillages électriques. La machine électrique 1 génère de l'énergie électrique en prélevant de la puissance mécanique sur l'arbre 2 du générateur de gaz 3, l'énergie cinétique de rotation prélevée sur le générateur de gaz étant transformée en énergie électrique par ladite machine.

Cette machine électrique 1 peut être non réversible et constituée d'un simple démarreur, si le besoin de génération électrique n'existe pas.

Sur la figure 2 est illustrée l'évolution, en fonction du temps et de la configuration possible de la turbomachine, du régime de l'arbre 2 du générateur de gaz 3 en trait plein et du régime de l'arbre 8 de la turbine libre 9 en pointillés. On peut voir que l'évolution du régime des deux arbres est indépendante. Le point correspondant à l'instant de sortie de la phase de démarrage est indiqué également.

Pour un turbomoteur, avec une turbine libre et un système de démarrage classique utilisant une machine électrique réversible, le prélèvement mécanique sur l'arbre du générateur de gaz servant à générer de la puissance électrique par la machine électrique réversible 1 dans un mode de fonctionnement générateur grève les performances du générateur de gaz.

En effet, la variation, au cours du vol, de la puissance mécanique prélevée par la machine électrique 1 et les équipements sur le générateur de gaz se traduit par un déplacement de la ligne de fonctionnement du moteur dans le champ compresseur. Ce déplacement correspond à une marge au pompage qu'il est nécessaire de provisionner, ce qui a pour conséquence :
- de pénaliser l'optimisation de la ligne de fonctionnement du moteur, en interdisant l'utilisation du compresseur à un taux de pression optimal ;
- de dégrader de ce fait les performances stabilisées, avec un impact sur la consommation spécifique.

Avec une telle configuration, une solution pour ne pas prélever de puissance mécanique sur l'arbre du générateur de gaz afin de générer de l'électricité consiste à utiliser une machine électrique pour la fonction de démarrage avec un système de débrayage, et une autre machine électrique solidaire de l'arbre de turbine libre pour la fonction de génération comme illustré sur la figure 1 par la seconde machine électrique 7, ce qui est pénalisant en termes de masse et de coût pour une configuration classique de turbomoteur ou turbogénérateur. Cette architecture, pour autant, pourrait devenir nécessaire si le besoin de découpler la fonction démarrage/génération électrique « non propulsive » de la fonction principale génération électrique « propulsive » est obligatoire d'un point de vue architecture électrique (redondance, type de réseau/ stockage disponible).

Une architecture connue permettant de démarrer un turbogénérateur à turbine libre sans adjonction de démarreur spécifique est divulguée dans le document FR 2 929 324. Dans le cas où le besoin de découpler les fonctions n'existe pas, cette solution technique permet de réduire la masse totale et le coût et d'augmenter la fiabilité du turbogénérateur par rapport à une turbomachine comprenant deux machines électriques comme sur la figure 1. La solution technique décrite dans ce document consiste en un système de commutation utilisant deux roues libres permettant de démarrer le générateur de gaz d'un turbomoteur à turbine libre, puis de générer l'énergie électrique non propulsive en prélevant l'énergie mécanique sur l'arbre de turbine libre. Les équipements restent entraînés via le générateur de gaz et la boîte d'accessoires.

Cette solution permet notamment d'améliorer les performances transitoires du générateur de gaz, en évitant les inconvénients d'un prélèvement d'énergie cinétique sur le générateur de gaz, et notamment le problème du déplacement de la ligne de fonctionnement du moteur dans le champ compresseur du fait de la variation, au cours du vol, de la puissance mécanique prélevée par la machine électrique.

Le document US2016/097328A1 divulgue une turbomachine comportant un générateur de gaz muni d'un arbre mécanique rotatif, une première machine électrique réversible et une turbine libre selon l'état de la technique.

Afin d'améliorer la performance de la turbomachine à turbine libre et des équipements pendant la phase de démarrage, il serait intéressant aussi de pouvoir entraîner l'ensemble des équipements de la turbomachine via la turbine libre. Mais la performance de la pompe à carburant étant associée à sa vitesse de rotation, l'évolution de vitesse de la turbine libre après la phase de démarrage ne permettrait pas, ou impacterait fortement, le design de l'ensemble système carburant pour garantir un bon démarrage de la turbomachine.

### Exposé de l'invention

A cet effet, la présente invention propose une turbomachine à turbine libre dotée d'une pluralité de machines électriques propulsive et non propulsive permettant d'améliorer le rendement global de la turbomachine tout en entraînant indépendamment en temps et en vitesse les équipements de la turbomachine par rapport au démarrage de son générateur de gaz.

Dans un objet de l'invention, il est proposé une turbomachine, notamment pour un aéronef à voilure tournante, comportant un générateur de gaz muni d'un arbre mécanique rotatif, une première machine électrique réversible, une turbine libre entraînée en rotation par un flux de gaz généré par le générateur de gaz, au moins un accessoire parmi une pompe à huile et une pompe à carburant, une boîte d'accessoires comportant un train d'engrenages configuré pour entraîner ledit au moins un accessoire, et une seconde machine électrique.

Selon une caractéristique technique de l'invention, la seconde machine électrique est réversible, la première machine électrique est mécaniquement couplée au générateur de gaz, et la seconde machine électrique et la boîte d'accessoires sont mécaniquement couplées à la turbine libre, et la turbomachine est dépourvue de raccordement cinématique entre le train d'engrenages de la boîte d'accessoires (14) et l'arbre (18) du générateur de gaz.

Selon cette architecture, le générateur de gaz et la boîte d'accessoires sont ainsi dépourvus de liaison cinématique entre eux. De plus, les accessoires, en totalité ou seulement une partie d'entre eux, sont couplés à la turbine libre pour être entraînés uniquement par la turbine libre une fois que celle-ci a atteint son régime de fonctionnement autonome. Le régime de fonctionnement autonome de la turbine libre correspond à un régime auquel la turbine libre fournit une puissance demandée sans aucune assistance, la seule énergie fournie à la turbine libre étant celle du flux de gaz généré par le générateur de gaz.

Les accessoires couplés à la turbine libre uniquement ne sont plus liés à la vitesse de rotation du générateur de gaz, ce qui permet de les entraîner à la bonne vitesse, et surtout par rapport à leur besoin et non au besoin du générateur de gaz. Par exemple, les pompes peuvent être entraînées avant le générateur de gaz pour amorcer le circuit carburant et donc remplir les canalisations et ne pas avoir de démarrage raté.

Le couplage de tout ou partie des accessoires à la turbine libre plutôt qu'au générateur de gaz permet d'améliorer le rendement global de la turbomachine. Certains accessoires, de préférence ceux qui ne nécessitent qu'une faible énergie de prélèvement mécanique, pourront cependant rester couplés au générateur de gaz, c'est-à-dire en prise directe ou indirecte avec l'arbre de ce dernier. Un exemple d'accessoire éligible peut être constitué par un alternateur de type PMA (acronyme de Permanent Magnet Alternator) qui sert à alimenter le calculateur du moteur et qui peut aussi intégrer un dispositif de mesure de vitesse de l'arbre du générateur de gaz.

L'architecture de la turbomachine selon l'invention avec ses deux machines électriques permet ainsi d'initier la rotation à la fois des accessoires, de la turbine libre et celle du générateur de gaz jusqu'à ce que le générateur de gaz puisse fonctionner en autonomie, puis de continuer d'entraîner la turbine libre, et les accessoires jusqu'à ce que la turbine libre puisse également fonctionner en autonomie. Les accessoires en prise sur la TL peuvent ainsi être entraînés par la seconde machine électrique en avance de phase par rapport au générateur de gaz, ce qui permet d'avoir un circuit carburant et huile dans les meilleures conditions pour améliorer les performances de démarrage du générateur de gaz et pour améliorer les performances d'aspiration et d'auto amorçage du circuit carburant par rapport aux contraintes d'intégration dans l'aéronef.

Sur une application de la turbomachine de type turbogénérateur, la machine électrique en prise sur la turbine libre est dimensionnée pour générer des niveaux de puissance électrique élevés, et peut, lorsqu'elle est utilisée en mode moteur, facilement délivrer un couple pour entraîner la turbine libre et les accessoires pendant la phase de démarrage.

En outre, l'indépendance mécanique de la turbine libre et du générateur de gaz offre la possibilité de réaliser une ventilation indépendante de la turbine libre et du générateur de gaz afin de contrôler thermiquement la turbomachine lorsqu'elle est à l'arrêt.

En outre, l'architecture selon l'invention permet, en cas de rupture de l'arbre de turbine libre en fonctionnement, d'impacter directement l'entrainement des accessoires (dont la pompe à carburant) qui se fait via cet arbre. La pompe à carburant n'étant plus entraînée, cela a pour effet direct d'éteindre instantanément le moteur et donc d'empêcher l'établissement d'une survitesse de la turbine libre. Cette architecture a donc pour effet de protéger la turbine libre contre une survitesse qui risquerait d'amener à une rupture des parties de la turbine sous l'effet des efforts centrifuges. Cette architecture permet ainsi de ne pas avoir recours à d'autres dispositifs de protection survitesse comme le dispositif de délestage des aubes connu sous la dénomination anglaise dite de « Blade Shedding », avec un potentiel gain de masse (blindage).

Selon un premier aspect de la turbomachine, la seconde machine électrique peut être mécaniquement couplée à la turbine libre via la boîte d'accessoires.

Selon un deuxième aspect de la turbomachine, la boîte d'accessoires peut être mécaniquement couplée à la turbine libre via une roue libre.

Cette solution permet uniquement d'éviter que la turbine libre soit entraînée par la seconde machine électrique pendant la phase de démarrage ce qui réduit l'inertie et le couple résistant.

Cette solution a l'avantage de pouvoir être utilisée aussi dans une configuration de turbomoteur car la roue libre permet de ne pas entraîner le rotor.

Le cas de fonctionnement en mode turbine libre bloquée pourrait être réalisé en pilotant transitoirement la seconde machine électrique en lien avec les équipements.

Selon un troisième aspect de la turbomachine, la turbomachine peut comprendre en outre une unité de commande de la seconde machine électrique configurée pour faire fonctionner la machine électrique en mode moteur à partir du démarrage de la turbomachine et jusqu'à ce qu'un des de fonctionnement de la turbine libre ait dépassé un seuil à partir duquel la turbine libre est autonome.

La turbomachine peut également comprendre une unité de commande de la première machine électrique configurée pour actionner la première machine électrique en mode moteur à compter du démarrage de la turbomachine ou suivant un critère de performance aux niveaux des équipements (pression carburant...) jusqu'à ce qu'un des paramètres mécaniques du premier arbre mécanique ait dépassé un seuil à partir duquel le générateur de gaz est autonome, puis en mode de générateur une fois que ledit paramètre du premier arbre mécanique a dépassé ledit seuil à partir duquel le générateur de gaz est autonome

Selon un quatrième aspect de la turbomachine, la seconde machine électrique est une machine électrique réversible, et ladite unité de commande de la seconde machine électrique est configurée pour faire fonctionner la seconde machine électrique en mode générateur une fois que ledit paramètre de fonctionnement de la turbine libre a dépassé ledit seuil à partir duquel la turbine libre est autonome.

Une fois la turbine libre en rotation autonome, la seconde machine électrique peut fonctionner en mode générateur et fournir ainsi de la puissance électrique à d'autres éléments.

Selon un cinquième aspect de la turbomachine, l'unité de commande peut être configurée pour faire fonctionner la seconde machine électrique en mode moteur avec une avance prédéterminée par rapport au démarrage du générateur de gaz entrainé par la première machine électrique, de façon à ce que l'entraînement d'une pompe à huile et d'une pompe à carburant par la seconde machine électrique s'effectue à des régimes de rotation permettant d'avoir un circuit de carburant et un circuit d'huile fonctionnant chacun dans des conditions optimales pour le démarrage du générateur de gaz.

Selon un autre aspect de l'invention, il est proposé un aéronef, tel qu'un aéronef à décollage et atterrissage vertical, comprenant au moins une turbomachine telle que définie ci-dessus.

### Brève description des dessins

[Fig. 1] La figure 1, déjà décrite, est une vue schématique simplifiée d'une turbomachine à turbine libre selon l'état de la technique.
[Fig. 2] La figure 2, déjà décrite, est une représentation graphique de l'évolution, en fonction du temps et de la configuration possible du turbogénérateur, du régime de l'arbre du générateur de gaz et du régime de l'arbre de la turbine libre de la turbomachine de la figure 1.
[Fig. 3] La figure 3 est un schéma d'une turbomachine à turbine libre selon un premier mode de réalisation de l'invention.
[Fig. 4] La figure 4 est une représentation graphique de l'évolution, en fonction du temps et de la configuration possible du turbogénérateur, du régime de l'arbre du générateur de gaz et du régime de l'arbre de la turbine libre de la turbomachine de la figure 3.
[Fig. 5] La figure 5 est un schéma d'une turbomachine à turbine libre selon un second mode de réalisation de l'invention.
[Fig. 6] La figure 6 est une représentation graphique de l'évolution, en fonction du temps et de la configuration possible du turbogénérateur, du régime de l'arbre du générateur de gaz et du régime de l'arbre de la turbine libre de la turbomachine de la figure 5.

### Description des modes de réalisation

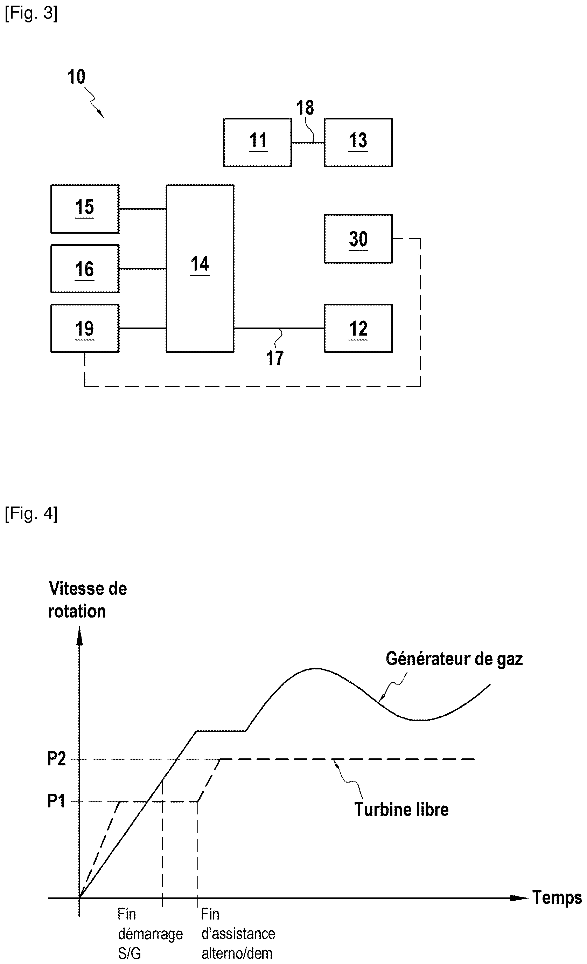

Sur la figure 3 est présentée schématiquement une turbomachine 10 à turbine libre selon un premier mode de réalisation de l'invention.

La turbomachine 10 comprend une première machine électrique 11 réversible, une turbine libre 12, un générateur de gaz 13, une boîte d'accessoires 14, une pompe à carburant 15, une pompe à huile 16, et une seconde machine électrique 19 réversible également dans ce mode de réalisation.

La turbine libre 12 comprend un premier arbre 17 et le générateur de gaz 13 comprend un second arbre 18. Le second arbre 18 du générateur de gaz 13 est raccordé à la première machine électrique 11.

La première machine électrique 11 est configurée pour fonctionner en mode moteur au démarrage de la turbomachine 10 et ainsi entraîner en rotation le second arbre 18 du générateur de gaz 13 depuis le démarrage jusqu'à ce que le générateur de gaz soit autonome. Autrement dit, jusqu'à ce qu'un paramètre de fonctionnement du générateur de gaz 13 ait dépassé un seuil de fonctionnement du générateur de gaz 13 en autonomie.

Dans ce premier mode de réalisation, le premier arbre 17 de la turbine libre 12 est raccordé mécaniquement sans intermédiaire à la boîte d'accessoires 14 en permanence. La boîte d'accessoires 14 est mécaniquement couplée à la seconde machine électrique 19, ce qui permet ainsi d'avoir la turbine 12 couplée à la seconde machine électrique 19 pendant toutes les phases de fonctionnement de la turbomachine 10, notamment pendant la phase de démarrage et la phase de génération électrique.

En alternative, un arbre de rotor de la seconde machine électrique 19 pourrait être en prise directe sur le premier arbre 17 de la turbine libre 12, par exemple avec un engrènement par pignons droits ou coniques, donc sans passer par un train d'engrenages de la boîte d'accessoires 14. En d'autres termes, la liaison cinématique entre la seconde machine électrique 19 et la turbine libre 12 ne s'effectuerait pas via la boîte d'accessoires 14. Là aussi, la turbine libre 12 resterait couplée à la seconde machine électrique 19 pendant toutes les phases de fonctionnement de la turbomachine.

La boîte d'accessoires 14 est également mécaniquement couplée à la pompe à carburant 15, d'une part, et à la pompe à huile 16, d'autre part. Dans d'autres modes de réalisation d'autres accessoires peuvent être mécaniquement couplés à la boîte d'accessoires 14.

La turbomachine 10 comprend en outre une unité de commande 30 de la seconde machine électrique 19. L'unité de commande 30 est configurée pour piloter la seconde machine électrique 19 dans un mode moteur lors d'une phase de démarrage de la turbomachine 10 et la piloter dans un mode générateur lorsque la puissance disponible sur le premier arbre 17 de la turbine libre 12 atteint un niveau suffisant permettant de maintenir en rotation les équipements et d'assurer le bon fonctionnement du GG. La puissance étant l'image de l'autonomie de la turbine libre 12, elle peut s'intégrer sous forme de paramètre de fonctionnement L'unité de commande 30 reçoit ainsi des informations relatives à un paramètre de fonctionnement de la turbine libre 12 et aux paramètres de la seconde machine électrique 19, telle que la vitesse de rotation de la turbine libre, de la machine électrique ou bien le couple développé par la turbine libre 12 ou la machine électrique, et le compare régulièrement à un seuil correspondant à la valeur du paramètre à partir de laquelle la turbine libre peut être considérée comme fonctionnant de manière autonome. La seconde machine électrique 19 n'étant plus utile pour entraîner la turbine libre 12 et les équipements en rotation, elle peut être placée en mode générateur une fois que la turbine libre est détectée comme autonome, pour fournir de l'énergie électrique (par exemple pour l'alimentation de moteurs d'un aéronef à propulsion électrique, en encore pour la stocker dans une unité de stockage).

La première machine électrique 11 est quant à elle commandée en mode générateur lorsque le générateur de gaz 13 atteint un seuil de vitesse identifié comme son seuil d'autonomie.

La première machine électrique 11 peut être commandée en mode générateur (fin de démarrage) avant que la seconde machine électrique 19 puisse l'être également de son côté (fin d'assistance).

Sur la figure 4 est représentée graphiquement l'évolution, en fonction du temps et de la configuration possible de la turbomachine, du régime du second arbre 18 du générateur de gaz 13 en trait plein et, en pointillés, du régime du premier arbre 17 de la turbine libre 12 de la turbomachine 10 de la figure 3.

En comparant le graphique de la figure 2 et celui de la figure 4, on voit que l'architecture de la turbomachine 10 selon l'invention permet une montée en régime plus rapide de la turbine libre 12 jusqu'à l'atteinte d'un premier palier en vitesse P1. Ce premier palier correspond à l'assistance par la seconde machine électrique 19 avec un pilotage de la vitesse de celle-ci, et est optimisé pour le bon fonctionnement des équipements ou accessoires pour la phase de démarrage, tels que la pompe à carburant 15 et la pompe à huile 16 notamment. Puis, après ce premier palier, l'arrêt du pilotage de la vitesse de la seconde machine électrique permet une nouvelle augmentation du régime de la turbine libre 12, générée par l'accroissement du flux d'air délivré par le générateur de gaz 13, jusqu'à ce que la turbine libre 12 atteigne un second palier en vitesse P2 correspondant à une vitesse de fonctionnement nominal de la seconde machine électrique 19 utilisée en mode générateur. Les rapports de démultiplication des trains d'engrenages de la boîte d'accessoires 14 seront prévus de façon à ce que la vitesse de fonctionnement nominal de la turbine libre 12 corresponde aux vitesses de fonctionnement nominal de la seconde machine électrique 19 et des autres équipements ou accessoires entraînés par la boîte d'accessoires.

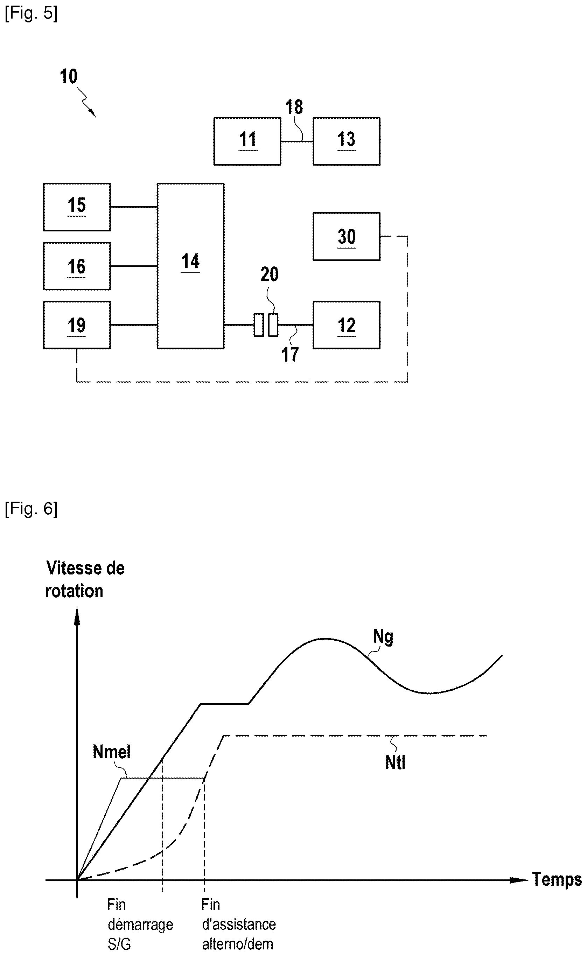

Sur la figure 5 est présentée schématiquement une turbomachine 10 à turbine libre selon un second mode de réalisation de l'invention.

La turbomachine 10 du second mode de réalisation illustré sur la figure 5 diffère de la turbomachine 10 du premier mode de réalisation illustré sur la figure 3 uniquement en ce qu'elle comprend un dispositif d'accouplement 20 configuré pour pouvoir commuter entre une configuration d'engagement et une configuration de désengagement. Le dispositif d'accouplement 20 peut comprendre par exemple une roue libre, couplé entre la turbine libre 12 et les engrenages de la boîte d'accessoires 14 auxquels sont reliés la seconde machine électrique 19 et des autres équipements ou accessoires. Dans ce second mode de réalisation, la turbine libre 12 est donc mécaniquement couplée à la seconde machine électrique 19via le dispositif d'accouplement 20 et la boîte d'accessoires 14.

Avantageusement, le dispositif d'accouplement 20 peut être passif, comme c'est le cas pour une roue libre, néanmoins un dispositif d'accouplement piloté reste possible, par exemple un embrayage. Dans le cas d'une roue libre, celle-ci est configurée pour se désengager lorsque la vitesse de la borne de la roue libre reliée à la boîte d'accessoires dépasse la vitesse de la borne de la roue libre reliée à l'arbre 17 de la turbine libre 12. Ainsi, tant que la seconde machine électrique 19 est pilotée dans un mode moteur lors d'une phase de démarrage de la turbomachine 10, la roue libre 20 est désengagée, de telle sorte que la turbine libre 12 n'est pas entraînée par la seconde machine électrique 19.

La montée en régime de la turbine libre évolue donc indépendamment et plus lentement que celle de la seconde machine électrique 19, puisque la turbine libre n'est entraînée que par le flux d'air délivré par le générateur de gaz 13. A l'inverse, lorsque le régime de la turbine libre atteint un certain seuil pour lequel la turbine libre est apte à entraîner la seconde machine électrique 19 et les accessoires via la boîte d'accessoires 14, la roue libre 20 est engagée, les vitesses à ses deux bornes étant alors les mêmes.

Lors d'une phase de démarrage de la turbomachine, la seconde machine électrique 19 se voit opposer moins d'inertie et de couple résistant, par comparaison avec la solution sans roue libre décrite précédemment. Si la turbomachine selon l'invention est utilisée dans une configuration de turbogénérateur, par exemple pour fournir de l'énergie électrique utilisée par un aéronef à propulsion électrique, cette solution a l'avantage lors de la phase de démarrage de moins devoir prélever sur le stockage électrique (batteries) de l'aéronef pour alimenter la seconde machine électrique 19. Une diminution de la capacité et donc de la masse des batteries de l'aéronef est alors envisageable.

Le dispositif d'accouplement 20 de cette solution est particulièrement avantageux dans le cadre de l'utilisation de la turbomachine selon l'invention dans une configuration de turbomoteur, par exemple pour un hélicoptère dont le rotor principal est entrainé par l'arbre 17 de la turbine libre via une boîte de transmission. Que ce dispositif d'accouplement 20 soit sous la forme d'une roue libre ou d'un embrayage piloté, cela permet de ne pas avoir à entraîner le rotor principal de l'hélicoptère lors de la phase de démarrage. La seconde machine électrique 19 peut donc être dimensionnée uniquement en fonction de l'énergie électrique qu'elle doit produire en mode générateur, et de l'entrainement des accessoires qu'elle doit assurer en mode moteur via la boîte d'accessoires lors de la phase de démarrage.

Sur la figure 6 est représentée graphiquement l'évolution, en fonction du temps et de la configuration possible de la turbomachine, du régime Nmel de la seconde machine électrique 19, en trait fin, du régime Ng du second arbre 18 du générateur de gaz 13 en trait fort et, en pointillés, du régime Ntl du premier arbre 17 de la turbine libre 12 de la turbomachine 10 de la figure 5.

En comparant le graphique de la figure 2 et celui de la figure 6, on voit que la montée en régime de la turbine libre 12, Ntl, est identique à celle de la figure 2 pour une même montée en régime, Ng, du générateur de gaz 13, mais en revanche, la montée en régime Nmel de la seconde machine électrique 19 est similaire à la montée en régime Ntl de la turbine libre 12 de la figure 4, ce qui permet de rapidement faire fonctionner des équipements ou accessoires, tels que la pompe à carburant 15 et la pompe à huile 16 notamment. Une fois que le régime de la turbine libre12 a atteint celui de la seconde machine électrique 19 , au rapport de réduction près s'il y a un entrainement indirect entre le premier arbre 17 et le rotor de la seconde machine électrique 19 via des engrenages de la boîte d'accessoires 14, le mode moteur de la seconde machine électrique 19 est arrêté, la turbine libre 12 pouvant alors entraîner les accessoires 15 et 16.

La turbomachine à turbine libre selon la présente invention permet ainsi d'optimiser la masse, le coût et la fiabilité du système de commutation et donc de la turbomachine. L'utilisation d'une première machine électrique pour le générateur à gaz d'une part et d'une seconde machine électrique pour la turbine libre d'autre part, en découplant mécaniquement la turbine libre et le générateur de gaz, permet, grâce à la configuration de l'invention, de pouvoir entraîner les accessoires via la turbine libre afin d'améliorer le rendement global de la turbomachine tout en conservant la possibilité d'entraîner les accessoires indépendamment du générateur de gaz lors de la phase de démarrage.

## Revendications

1. Turbomachine (10), notamment pour un aéronef à voilure tournante, comportant un générateur de gaz (13) muni d'un arbre mécanique (18) rotatif, une première machine électrique (11) réversible, une turbine libre (12) entraînée en rotation par un flux de gaz généré par le générateur de gaz (13), au moins un accessoire (15, 16) parmi une pompe à huile et une pompe à carburant, une boîte d'accessoires (14) comprenant un train d'engrenages configuré pour entraîner ledit au moins un accessoire (15, 16), et une seconde machine électrique (19),
**caractérisée en ce que** la seconde machine électrique (19) est réversible, la première machine électrique (11) est mécaniquement couplée au générateur de gaz (13), la boîte d'accessoires (14) et la seconde machine électrique (19) sont mécaniquement couplées à la turbine libre (12), et la turbomachine (10) est dépourvue de raccordement cinématique entre le train d'engrenages de la boîte d'accessoires (14) et l'arbre (18) du générateur de gaz (13),
la turbomachine (10) comprenant en outre une unité de commande (30) de la seconde machine électrique (19), et, lors du démarrage de la turbomachine (10), l'unité de commande (30) étant configurée pour faire fonctionner la seconde machine électrique (19) en mode moteur avec une avance prédéterminée par rapport au démarrage du générateur de gaz (13) entraîné par la première machine électrique (11), de façon à ce que l'entraînement d'une pompe à huile (16) et d'une pompe à carburant (15) par la seconde machine électrique (19) s'effectue à des régimes de rotation permettant d'avoir un circuit de carburant et un circuit d'huile fonctionnant chacun dans des conditions optimales pour le démarrage du générateur de gaz (13).

2. Turbomachine (10) selon la revendication 1, dans laquelle la seconde machine électrique (19) est mécaniquement couplée à la turbine libre (12) via la boîte d'accessoires (14).

3. Turbomachine (10) selon l'une des revendications 1 ou 2, dans laquelle la boîte d'accessoires (14) est mécaniquement couplée à la turbine libre (12) via un dispositif d'accouplement (20).

4. Turbomachine (10) selon la revendication 3, dans laquelle le dispositif d'accouplement (20) comprend une roue libre.

5. Turbomachine (10) selon l'une des revendications 1 à 4, dans laquelle l'unité de commande (30) est configurée pour faire fonctionner la seconde machine électrique (19) en mode moteur à partir du démarrage de la turbomachine (10) et jusqu'à ce qu'un des paramètres de fonctionnement de la turbine libre (12) ait dépassé un seuil à partir duquel la turbine libre (12) est autonome.

6. Turbomachine (10) selon la revendication 5, dans laquelle la seconde machine électrique (19) est une machine électrique réversible, et ladite unité de commande (30) de la seconde machine électrique (19) est configurée pour faire fonctionner la seconde machine électrique (19) en mode générateur une fois que ledit paramètre de fonctionnement de la turbine libre (12) a dépassé ledit seuil à partir duquel la turbine libre (12) est autonome.

7. Aéronef comprenant au moins une turbomachine selon l'une des revendications 1 à 6.

## Patentansprüche

1. Turbomaschine (1), insbesondere für ein Luftfahrzeug mit Drehflügel, die einen Gasgenerator (13) beinhaltet, der mit einer mechanischen Drehwelle (18), einer ersten reversiblen elektrischen Maschine (11), einer Freilaufturbine (12), die von einem Gasstrom drehbar angetrieben wird, der von dem Gasgenerator (13) erzeugt wird, mindestens einem Anbaugerät (15, 16) von einer Ölpumpe und einer Kraftstoffpumpe, einem Anbaugerätegetriebe (14) umfassend einen Getriebezug, der für den Antrieb des mindestens einen Anbaugeräts (15, 16) ausgestaltet ist, und einer zweiten elektrischen Maschine (19) ausgestattet ist,
**dadurch gekennzeichnet, dass** die zweite elektrische Maschine (19) reversibel ist, die erste elektrische Maschine (11) mechanisch mit dem Gasgenerator (13) gekoppelt ist, das Anbaugerätegetriebe (14) und die zweite elektrische Maschine (19) mechanisch mit der Freilaufturbine (12) gekoppelt sind, und die Turbomaschine (10) keine kinematische Verbindung zwischen dem Getriebezug des Anbaugerätegetriebes (14) und der Welle (18) des Gasgenerators (13) aufweist,
wobei die Turbomaschine (10) ferner eine Steuereinheit (30) der zweiten elektrischen Maschine (19) umfasst, und beim Start der Turbomaschine (10) die Steuereinheit (30) dazu ausgestaltet ist, die zweite elektrische Maschine (19) in dem Motormodus mit einem vorbestimmten Vorsprung in Bezug auf den Start des Gasgenerators (13), der von der ersten elektrischen Maschine (11) angetrieben wird, zu betreiben, sodass der Antrieb einer Ölpumpe (16) und einer Kraftstoffpumpe (15) durch die zweite elektrische Maschine (19) mit Drehzahlen erfolgt, die es ermöglichen, dass ein Kraftstoffkreislauf und ein Ölkreislauf jeweils unter für den Start des Gasgenerators (13) optimalen Bedingungen betrieben werden.

2. Turbomaschine (10) nach Anspruch 1, wobei die zweite elektrische Maschine (19) mit der Freilaufturbine (12) über das Anbaugerätegetriebe (14) mechanisch gekoppelt ist.

3. Turbomaschine (10) nach einem der Ansprüche 1 oder 2, wobei das Anbaugerätegetriebe (14) mit der Freilaufturbine (12) über eine Kupplungsvorrichtung (20) mechanisch gekoppelt ist.

4. Turbomaschine (10) nach Anspruch 3, wobei die Kupplungsvorrichtung (20) einen Freilauf umfasst.

5. Turbomaschine (10) nach einem der Ansprüche 1 bis 4, wobei die Steuereinheit (30) dazu ausgestaltet ist, die zweite elektrische Maschine (19) in dem Motormodus ab dem Start der Turbomaschine (10) und bis zu dem Zeitpunkt zu betreiben, zu dem einer der Betriebsparameter der Freilaufturbine (12) eine Schwelle überschritten hat, ab welcher die Freilaufturbine (12) autonom ist.

6. Turbomaschine (10) nach Anspruch 5, wobei die zweite elektrische Maschine (19) eine reversible elektrische Maschine ist, und die Steuereinheit (30) der zweiten elektrischen Maschine (19) dazu ausgestaltet ist, die zweite elektrische Maschine (19) in dem Generatormodus zu betreiben, sobald der Betriebsparameter der Freilaufturbine (12) die Schwelle überschritten hat, ab welcher die Freilaufturbine (12) autonom ist.

7. Luftfahrzeug, umfassend mindestens eine Turbomaschine nach einem der Ansprüche 1 bis 6.

## Claims

1. A turbomachine (10), particularly for a rotary-wing aircraft, including a gas generator (13) provided with a rotary mechanical shaft (18), a first reversible electric machine (11), a power turbine (12) rotationally driven by a stream of gas generated by the gas generator (13), at least one accessory (15, 16) from among an oil pump and a fuel pump, an accessory gearbox (14) comprising a gear train configured to drive said at least one accessory (15, 16), and a second electric machine (19),
**characterized in that** the second electric machine (19) is reversible, the first electric machine (11) is mechanically coupled to the gas generator (13), the accessory gearbox (14) and the second electric machine (19) are mechanically coupled to the power turbine (12), and the turbomachine (10) is devoid of any kinematic coupling between the gear train of the accessory gearbox (14) and the shaft (18) of the gas generator (13),
the turbomachine (10) further comprising a unit (30) for controlling the second electric machine (19), and, during the start-up of the turbomachine (10), the control unit (30) being configured to make the electric machine (19) operate in motor mode with a predetermined advance with respect to the start-up of the gas generator (13) driven by the first electrical machine (11), such that the driving of an oil pump (16) and a fuel pump (15) by the second electric machine (19) is done at rotation ratings making it possible to have a fuel circuit and an oil circuit each operating under optimal conditions for the start-up of the gas generator (13).

2. The turbomachine (10) as claimed in claim 1, wherein the second electric machine (19) is mechanically coupled to the power turbine (12) via the accessory gearbox (14).

3. The turbomachine (10) as claimed in one of claims 1 or 2, wherein the accessory gearbox (14) is mechanically coupled to the power turbine (12) via a coupling device (20).

4. The turbomachine (10) as claimed in claim 3, wherein the coupling device (20) comprises a free wheel.

5. The turbomachine (10) as claimed in one of claims 1 to 4, wherein the control unit (30) is configured to make the second electrical machine (19) operate in motor mode from the start-up of the turbomachine (10) and until one of the operating parameters of the power turbine (12) has exceeded a threshold above which the power turbine (12) is self-sustaining.

6. The turbomachine (10) as claimed in claim 5, wherein the second electric machine (19) is a reversible electric machine, and said unit (30) for controlling the second electric machine (19) is configured to make the second electric machine (19) operate in generator mode once said operating parameter of the power turbine (12) has exceeded said threshold above which the power turbine (12) is self-sustaining.

7. An aircraft comprising at least one turbomachine as claimed in one of claims 1 to 6.
